# EUROPÄISCHE PATENTANMELDUNG

(11) **EP 1 083 107 A2**
(43) Veröffentlichungstag der Anmeldung: **14.03.2001**
(21) Anmeldenummer: 00117709.6
(22) Anmeldetag: 17.08.2000
(51) Int. Cl.: B62B 7/06, B62B 9/00

(54) **Kinderwagen**

(30) Priorität: 20.08.1999 DE 29914459 U
(71) Anmelder: BRITAX-TEUTONIA KINDERWAGENFABRIK GmbH, D-32120 Hiddenhausen (DE)
(72) Erfinder: Nowak, Hartmut, 33154 Salzkotten (DE)
(74) Vertreter: Loesenbeck, Karl-Otto, Dipl.-Ing.

(57) **Zusammenfassung**

Ein Kinderwagen mit einem Fahrgestell, welches mit Schlitzen versehene Verriegelungsleisten zur Festlegung eines Sitz- und Liegeaufsatzes aufweist, soll so gestaltet werden, daß für die den Kinderwagen benutzende Person sofort erkennbar ist, daß der Sitz- und Liegeeinsatz in den Verriegelungsleisten nicht ordnungsgemäß verrastet ist.

Erfindungsgemäß ist der Kinderwagen mit einer Signaleinrichtung (14) ausgerüstet, die von einem Taster (15, 20) betätigt wird, so daß bei der Abweichung von der Sollstellung des Sitz- oder Liegeaufsatzes ein Signal ausgelöst wird. In einer bevorzugten Ausführung ist die Signaleinrichtung (14) in einem Gehäuse (19) angeordnet, in dem eine Knopfzelle (25) angeordnet ist, die durch eine Feder (26) belastet ist. An die Feder (26) und an die Knopfzelle (25) sind die Adern (23, 24) einer Leuchtdiode (22) angeschlossen. Wenn sich der Sitz- und Liegeeinsatz in der Sollstellung befindet, wird die Knopfzelle (25) von einem ortsfesten Kontakt (27) getrennt. Bei Abweichung von der Sollstellung berührt die Knopfzelle (25) den Kontakt (27), so daß der Stromkreis zur Auslösung des Signals geschlossen ist.

## Beschreibung

Die Erfindung betrifft einen Kinderwagen mit einem Fahrgestell, welches mit Schlitzen versehene Verriegelungsleisten zur Festlegung eines Sitz- und Liegeaufsatzes aufweist.

Bei dem in Frage kommenden Kinderwagen sind an dem Fahrgestell im wesentlichen zwei horizontale Verriegelungsleisten angebracht, die mit jeweils mindestens zwei Schlitzen versehen sind, die so gestaltet sind, daß eine Sicherungsnase einen Stab des Sitz- und Liegeeinsatzes hintergreift. Die Lage der Stäbe des Sitz- oder Liegeeinsatzes ist demzufolge genau vorgegeben. Es kann jedoch passieren, daß beim Aufsetzen des Sitz- oder Liegeeinsatzes diese Position nicht erreicht wird, so daß die Gefahr besteht, daß der Sitz- und Liegeeinsatz sich beim Fahren verschiebt oder sogar von dem Fahrgestell herunterfällt. Naturgemäß verbleibt die eigentlich erforderliche Sichtkontrolle.

Der Erfindung liegt die Aufgabe zugrunde, einen Kinderwagen der eingangs näher beschriebenen Art so zu gestalten, daß für die den Kinderwagen benutzende Person sofort erkennbar ist, daß der Sitz- und Liegeeinsatz in den Verriegelungsleisten nicht ordnungsgemäß verrastet ist.

Die gestellte Aufgabe wird durch einen Taster gelöst, der bei Abweichung der Sollstellung des Sitz- oder Liegeeinsatzes ein optisches und/oder akustisches Signal auslöst.

Durch das Signal wird die den Kinderwagen benutzende Person sofort darauf hingewiesen, daß der Sitz- und Liegeeinsatz nicht ordnungsgemäß verrastet ist. Es kann dann die Lage des Sitz- oder Liegeeinsatzes korrigiert werden.

Gemäß einer bevorzugten Ausführungsform ist vorgesehen, daß der Taster ein Magnet ist, der an der Verriegelungsleiste angebracht ist, der mit einer Steuerplatine zusammenwirkt, die von einer Spannungsquelle beaufschlagt wird und daß die Steuerplatine mit einer Lichtquelle verbunden ist. Die Anordnung kann so geschaltet werden, daß je nach Anordnung des Magneten das Signal ausgelöst wird, wenn bei nicht ordnungsgemäßer Verriegelung des Kinderwagenaufsatzes das Magnetfeld durchbrochen oder unberührt bleibt.

Als Magnet kann ein entsprechend gestalteter Magnetschalter oder ein sogenannter Reed-Kontakt verwendet werden. Derartige Bauteile sind handelsüblich in äußerst kompakter Weise zu beziehen, so daß sie nicht stören.

Gemäß einer anderen Ausführungsform ist vorgesehen, daß die elektrische Schalteinrichtung einen Kontakthebel aufweist, der beispielsweise durch eine Feder geschlossen wird, wenn der Kinderwagenaufsatz nicht ordnungsgemäß verriegelt ist.

Bei denen zuvor beschriebenen Ausführungen ist dem Taster eine von einer Spannungsquelle gespeiste Platine zugeordnet. Als Spannungsquellen kommen Batterien oder Akkumulatoren in Frage. Eine einfachste Ausführung ergibt sich jedoch, wenn auf eine Steuerplatine verzichtet werden kann. In einer weiteren Ausführungsform ist deshalb vorgesehen, daß der Taster direkt oder indirekt mit einer durch eine Feder belasteten Spannungsquelle gekoppelt ist, wobei in der Sollstellung des Sitz- oder Liegeaufsatzes der Stromkreis zur Auslösung des optischen und/oder akustischen Signales unterbrochen ist, und bei Abweichung von der Sollstellung der Stromkreis geschlossen ist. Bei dieser Ausführung wird die Spannungsquelle sinngemäß auch als Schalter verwendet, um den Stromkreis zu schließen bzw. zu unterbrechen. Auch diese Anordnung ist zweckmäßigerweise in einem Gehäuse angeordnet. Das das optische und/oder akustische Signal auslösende Element ist an ein Kabel angeschlossen, welches mindestens zwei Adern aufweist. Die Anzahl der Bauteile wird minimiert, wenn eine Ader mit der metallischen Feder und die andere Ader mit einem ortsfesten Kontakt verbunden ist, so daß beim Abweichen des Sitz- und Liegeaufsatzes von der Sollstellung die Spannungsquelle zur Schließung des Stromkreises den Kontakt berührt. Die metallische Feder stützt sich zweckmäßigerweise an der Wand des Gehäuses ab. Da die erfindungsgemäße Signaleinrichtung äußerst kompakt sein soll, wird als Spannungsquelle bevorzugt eine Batterie in Form einer Knopfzelle verwendet. Sofern beim Abweichen des Sitz- und Liegeaufsatzes von der Sollstellung ausschließlich ein optisches Signal erzeugt werden soll, ist vorgesehen, daß das Element eine Leuchtdiode ist.

Anhand der beiliegenden Zeichnungen wird die Erfindung noch näher erläutert.

Es zeigen:

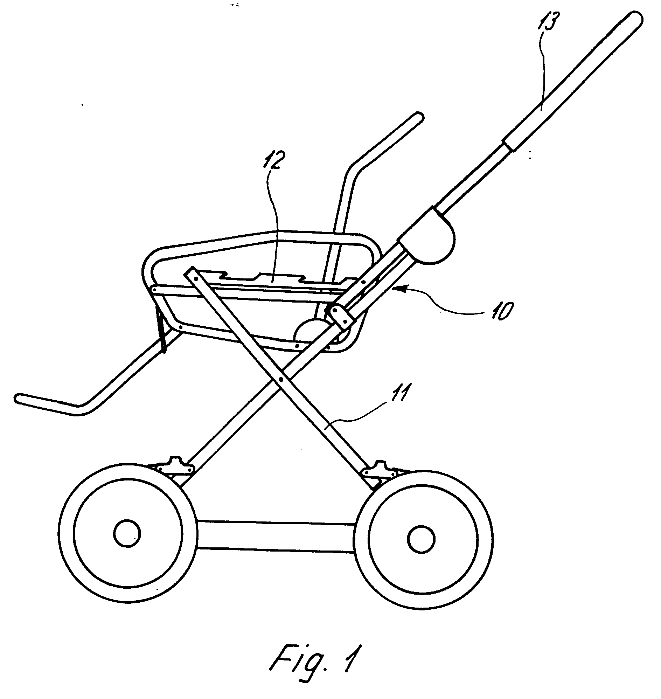

- Figur 1: ein Ausführungsbeispiel eines Kinderwagens,
- Figur 2: die Signaleinrichtung in einer ersten Ausführungsform,
- Figur 3: die Signaleinrichtung in einer zweiten Ausführungsform
- Figur 4: die Signaleinrichtung in einer dritten Ausführungsform.

Der erfindungsgemäße Kinderwagen 10 ist aus Darstellungsgründen ohne den Sitz- und Liegeaufsatz dargestellt. Das Fahrgestell 11 ist mit zwei parallel und im Abstand zueinander stehenden Verriegelungsleisten 12 ausgestattet.

An das Fahrgestell 11 ist der Schiebebügel 13 angelenkt.

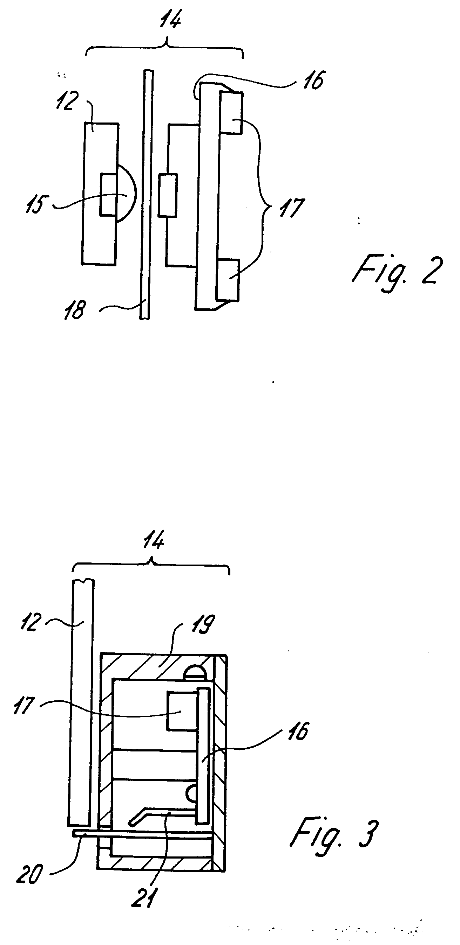

Den Verriegelungsleisten 12 ist eine in den Figuren 2 und 3 dargestellte Signaleinrichtung 14 zugeordnet, die in einem Gehäuse angeordnet ist. An die Verriegelungsleiste 12 ist ein Magnet oder ein Magnetschalter 15 angesetzt.

Die Signaleinrichtung 14 beinhaltet außerdem eine Platine 16, die nicht näher erläutert wird und von zwei Batterien 17 oder zwei Akkus elektrisch beaufschlagt wird.

Durch das Bezugszeichen 18 ist ein aus Stahl bestehendes Bauteil des Kinderwagenaufsatzes dargestellt. Die Anordnung 14 kann so geschaltet sein, daß entweder beim Durchbrechen des vom Magneten 15 erzeugten Magnetfeldes das Signal gegeben wird oder wenn dieses Magnetfeld nicht berührt wird.

Bei der Ausführung nach der Figur 3 ist die elektrische Anordnung in einem Gehäuse 19 vorgesehen, welches benachbart zu den Verriegelungsleisten 12 angeordnet ist. Aus dem Gehäuse ragt eine Feder 20 heraus, die einen Kontakt 21 schließt, wenn der Kinderwagenaufsatz nicht ordnungsgemäß in die Verriegelungsleisten 12 gesetzt ist.

Auch diese Signaleinrichtung 14 enthält eine Steuerplatine 16, die von einer oder mehreren Batterien 17 elektrisch beaufschlagt wird.

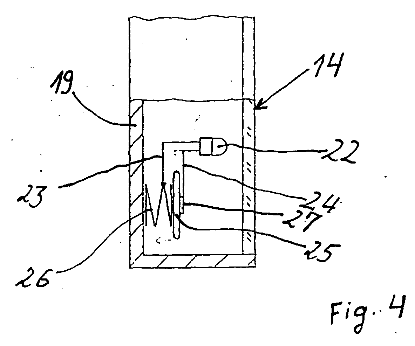

Die Figur 4 zeigt eine weitere Ausführungsform der Signaleinrichtung 14, die in einem Gehäuse 19 angeordnet ist, welches durch eine transparente bzw. lichtdurchlässige Platte verschlossen ist. Die Signaleinrichtung 14 besteht im wesentlichen aus einer Leuchtdiode 22, die an ein Kabel angeschlossen ist, welches die beiden Adern 23, 24 aufweist. Die Signaleinrichtung 14 enthält ferner eine Knopfzelle 25 als Spannungsquelle. Diese Knopfzelle 25 wird durch eine Druckfeder 26 belastet, die sich mit einem Ende an der Knopfzelle 25 und mit dem anderen Ende an einer Innenfläche des Gehäuses 19 abstützt. Die Ader 23 ist direkt mit der metallischen Druckfeder 26 verbunden, während die andere Ader 24 an einen ortsfesten Kontakt 26 angeschlossen ist. In der Figur 4 ist die Stellung der Knopfzelle 25 dargestellt, die sich einstellt, wenn der Sitz- und Liegeeinsatz von der Sollstellung abweicht. Steht dieser Sitz- oder Liegeeinsatz in der richtigen Stellung, wird über den nicht dargestellten Taster direkt oder indirekt die Knopfzelle 25 entgegen der Wirkung der Druckfeder 26 so verstellt, daß der Stromkreis unterbrochen wird, da sie den Kontakt 26 nicht mehr berührt. Die Knopfzelle 25 wirkt demzufolge sinngemäß wie ein Schalter. Bei dieser Ausführung ist die Anzahl der Bauteile äußerst gering.

## Patentansprüche

1. Kinderwagen mit einem Fahrgestell, welches mit Schlitzen versehene Verriegelungsleisten zur Festlegung des Sitz- und Liegeaufsatzes aufweist, **gekennzeichnet durch** einen derart ausgebildeten Taster (15, 20), der bei Abweichung von der Sollstellung des Sitz- oder Liegeaufsatzes ein optisches und/oder akustisches Signal auslöst.

2. Kinderwagen nach Anspruch 1, **dadurch gekennzeichnet**, daß der Taster (15) ein Magnet oder ein Magnetschalter ist.

3. Kinderwagen nach Anspruch 1, **dadurch gekennzeichnet**, daß der Taster (20) ein Stab oder eine Feder ist, der mit einem Kontakt 21 zusammenwirkt.

4. Kinderwagen nach einem oder mehreren der vorhergehenden Ansprüche 1-3, **dadurch gekennzeichnet**, daß dem Taster (15, 20) eine von einer Spannungsquelle gespeiste Platine zugeordnet ist.

5. Kinderwagen nach Anspruch 1, **dadurch gekennzeichnet, daß** der Taster direkt oder indirekt mit einer durch eine Feder (26) belasteten Spannungsquelle (25) derart gekoppelt ist, daß in der Sollstellung des Sitz- oder Liegeaufsatzes der Stromkreis zur Auslösung des optischen und/oder akustischen Signals unterbrochen ist.

6. Kinderwagen nach Anspruch 5, **dadurch gekennzeichnet, daß** das das optische und/oder akustische Signal auslösende Element an ein zumindest zwei Adern ausweisendes Kabel angeschlossen ist, daß eine Ader (23) mit der metallischen Feder (26) und die andere Ader (24) mit einem ortsfesten Kontakt (27) verbunden ist, so daß bei Abweichung des Sitz- und Liegeeinsatzes von der Sollstellung die Spannungsquelle zur Schließung des Stromkreises den Kontakt (27) berührt, und daß in der Sollstellung des Sitz- und Liegeeinsatzes die Spannungsquelle (25) im Abstand zum ortsfesten Kontakt (26) steht.

7. Kinderwagen nach einem oder mehreren der vorhergehenden Ansprüche 1 bis 6, **dadurch gekennzeichnet, daß** die Spannungsquelle eine Knopfzelle (25) ist.
